# EUROPÄISCHE PATENTSCHRIFT

(11) **EP 1 068 013 B1**
(45) Veröffentlichungstag und Bekanntmachung des Hinweises auf die Patenterteilung: **04.06.2003**
(21) Anmeldenummer: 99944125.6
(22) Anmeldetag: 31.03.1999
(51) Int. Cl.: B01L 3/02

(54) **VORRICHTUNG ZUR AUFNAHME UND ABGABE EINER DEFINIERTEN FLÜSSIGKEITSMENGE**
DEVICE FOR RECEIVING AND DISCHARGING A GIVEN AMOUNT OF LIQUID
DISPOSITIF DESTINE A RECEVOIR ET A DISTRIBUER UNE QUANTITE DE LIQUIDE DEFINIE

(30) Priorität: 03.04.1998 DE 29806142 U
(43) Veröffentlichungstag der Anmeldung: 17.01.2001
(73) Patentinhaber: November Aktiengesellschaft Gesellschaft für Molekulare Medizin, 91056 Erlangen (DE)
(72) Erfinder: BERTLING, Wolf, D-91056 Erlangen (DE)
(74) Vertreter: Gassner, Wolfgang, Dr.
(86) Internationale Anmeldenummer: DE9901052
(87) Internationale Veröffentlichungsnummer: WO99051350

(56) Entgegenhaltungen:
- DE-A- 2 901 827
- DE-A- 3 016 594
- DE-A- 3 701 250
- DE-U- 8 803 331
- DE-U- 9 200 604

## Beschreibung

Die Erfindung betrifft eine Vorrichtung zur Aufnahme und Abgabe einer definierten Flüssigkeitsmenge.

Aus der G 88 03 331.7 ist eine Pipette, insbesondere zur Verwendung in der Dentaltechnik, bekannt. Dabei ist an einem Saugröhrchen ein Rührwerkzeug angebracht. Bei der bekannten Pipette muß die Flüssigkeit mittels eines Saugers in das Saugröhrchen gesaugt werden. Die Menge der angesaugten Flüssigkeit hängt von der Art und Weise der Betätigung des Saugers ab. Sie kann variieren.

Die EP 0 569 851 A1 beschreibt eine Pipettiervorrichtung zum Mischen von Flüssigkeiten. Dabei ist die Pipette mit einer mit einem Exzenter verbundenen Aufnahmeeinrichtung verbunden. Die Vorrichtung ist aufwendig und teuer. Sie erfordert u.a. eine besondere Unterdruckleitung zum Ansaugen der zu pipettierenden Flüssigkeit.

Aus JP Patent Abstracts of Japan: 07080331 A ist eine Pipettenspitze mit einem daran angeformten radial umlaufenden Dekkel bekannt.

Nach dem Stand der Technik ist außerdem zur Aufnahme einer definierten Menge an Blut eine aus Glas hergestellte Kapillare bekannt. Das aufgenommene Blut kann mittels eines auf die Kapillare aufsetzbaren Gummibalgs bzw. Balgs aus der Kapillare herausgedrückt und in ein Reagenzglas überführt werden. Dort wird es mit einem Reagenz zumeist unter Zuhilfenahme der Kapillare verrührt.

Das Aufsetzen des Balgs ist umständlich. Dabei kann es zum Bruch der Kapillare kommen. Die mit der Kapillare erzeugbare Rührwirkung ist ungenügend.

Aufgabe der Erfindung ist es, die Nachteile nach dem Stand der Technik zu beseitigen. Es soll insbesondere eine Vorrichtung zur Aufnahme und Abgabe einer definierten Flüssigkeitsmenge angegeben werden, die einfach handhabbar und mit der eine verbesserte Rührwirkung erzielbar ist.

Diese Aufgabe wird durch die Merkmale des Anspruchs 1 gelöst. Zweckmäßige Ausgestaltungen ergeben sich aus den Merkmalen der Ansprüche 2 bis 9.

Erfindungsgemäß wird die Aufgabe durch eine Vorrichtung zur Aufnahme und Abgabe einer definierten Flüssigkeitsmenge gelöst, wobei am einen Ende einer Kapillare ein Mittel zum Rühren und in der Nähe des anderen Endes ein Balg vorgesehen ist. Die erfindungsgemäße Vorrichtung ist einfach zu handhaben. Das Aufschieben eines separaten Balgs auf die Kapillare entfällt. Die mit der Kapillare erzeugbare Rührvorrichtung ist verbessert.

Der Balg kann einen Durchbruch aufweisen. Das ermöglicht ein selbsttätiges Ansaugen der Flüssigkeit in die Kapillare. Die Flüssigkeit kann durch Zuhalten des Durchbruchs und Zusammendrücken des Balgs aus der Kapillare herausgedrückt werden.

Das Mittel zum Rühren ist zweckmäßigerweise in Form eines hakenartigen Fortsatzes ausgebildet, der eine Spitze aufweisen kann. Das vereinfacht und ermöglicht insbesondere das sogenannte "Häkeln" von Blut.

Nach einem weiteren Ausgestaltungsmerkmal kann der Balg eine ziehharmonikaartige Faltung aufweisen. Das erleichtert dessen Zusammendrücken.

Die Kapillare, der Balg und das Mittel zum Rühren können einstückig aus Kunststoff hergestellt sein. Das vereinfacht und verbilligt die Herstellung.

Nach einer weiteren Ausgestaltungsform kann der Balg an eine rohrartige Aufnahme angeformt sein, wobei die rohrartige Aufnahme sich in Richtung einer dem Balg gegenüberliegenden Öffnung verjüngen kann. In die rohrartige Aufnahme ist zweckmäßigerweise im Bereich der Öffnung eine aus Glas hergestellte Kapillare reibschlüssig eingesteckt. Auch diese aus zwei Teilen bestehende Vorrichtung ist einfach herzustellen. Es kann dabei auf marktgängige Glaskapillaren zurückgegriffen werden. Die Glaskapillare ist durch die Einbettung in die rohrartige Aufnahme vor Bruchgefahr geschützt.

Weitere Vorteile der Erfindung werden anhand der in der Zeichnung dargestellten Ausführungsbeispiele näher erläutert. Es zeigen:
- Fig.1: eine schematische Seitenansicht einer ersten Ausführungsform und
- Fig.2: eine Detailansicht gemäß Fig.1,
- Fig. 3: eine schematische Querschnittsansicht einer zweiten Ausführungsform,
- Fig. 4: eine erste Seitenansicht gemäß Fig. 3 und
- Fig. 5: eine zweite Seitenansicht gemäß Fig. 3.

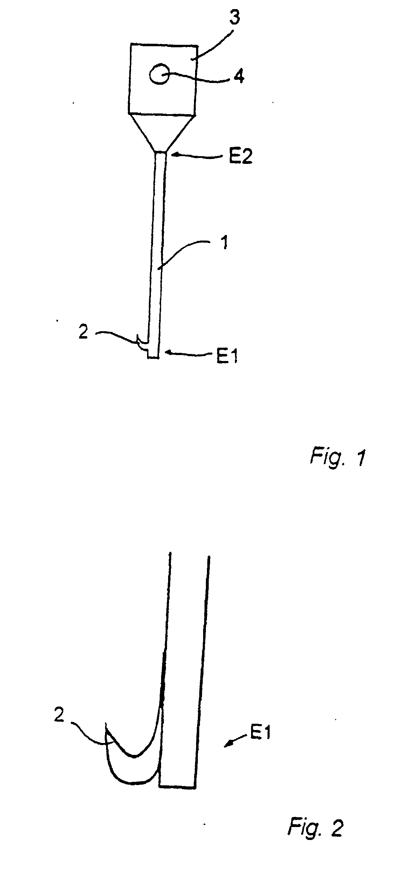

In den Fig.1 und 2 ist an einem Ende E1 einer aus Kunststoff hergestellten Kapillare 1 ein hakenartiger Fortsatz 2 angespritzt. Am anderen Ende E2 befindet sich ein Balg 3 mit einem Durchbruch 4. Der Balg 3 kann ziehharmonikaartige Falten zum erleichterten Zusammendrücken aufweisen.

Die Kapillare ist so ausgebildet, daß sie zur Aufnahme einer definierten Flüssigkeitsmenge, hier zur Aufnahme von 25µl Blut, geeignet ist. Sie ist vorteilhafterweise aus einem durchsichtigen, biologisch inerten Kunststoff hoher Bruchfestigkeit in einstückiger Ausbildung hergestellt.

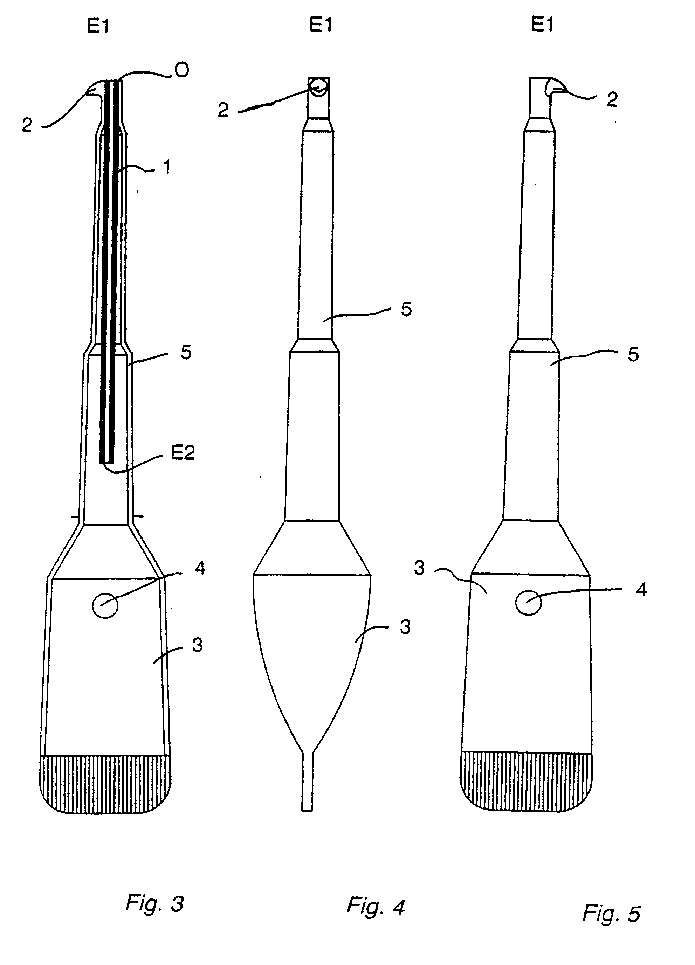

In den Fig. 3 bis 5 ist ein weiteres Ausführungsbeispiel gezeigt. An einem stufenweise in Richtung einer Öffnung O sich verjüngenden Rohr 5 ist an dem der Öffnung O gegenüberliegenden Ende der Balg 3 angebracht. In der Nähe der Öffnung O weist das Rohr 5 einen Durchmesser auf, der eine reibschlüssige Aufnahme einer aus Glas hergestellten Kapillare 1 gestattet. Der hakenartige Fortsatz 2 ist in der Nähe der Öffnung O vorgesehen. Vorteilhafterweise sind der Balg 3 und der hakenartige Fortsatz 2 in einstückiger Ausbildung mit dem Rohr 5 aus spritzgegossenem Kunststoff hergestellt.

### Die Funktion der Vorrichtung ist folgende:

Zur Aufnahme von Flüssigkeit, z.B. Blut, wird das eine Ende E1 der Kapillare in Kontakt mit der Flüssigkeit gebracht. Die Flüssigkeit wird durch Kapillarkräfte bis zu einer bestimmten Höhe in der Kapillare 1 aufgenommen. Vorteihafterweise wird die Kapillare vollständig mit Blut gefüllt. Die dabei aus der Kapillare 1 verdrängte Luft entweicht über den Durchbruch 4.

Zur Abgabe der in der Kapillare 1 aufgenommenen Flüssigkeit wird der Durchbruch 4, z.B. mit dem Daumen, verschlossen. Durch Druck auf den elastischen Balg 3 wird die Flüssigkeit aus der Kapillare 1 gedrückt.

Die Flüssigkeit kann in einem Reagenzglas mittels des hakenartigen Fortsatzes 2 mit einem Reagenz wirkungsvoll verrührt werden.

### Bezugszeichenliste

- 1: Kapillare
- 2: hakenartiger Fortsatz
- 3: Balg
- 4: Durchbruch
- 5: Rohr

- E1: Ende
- E2: anderes Ende
- O: Öffnung

## Patentansprüche

1. Vorrichtung zur Aufnahme und Abgabe einer vorgegebenen Flüssigkeitsmenge, mit einer Kapillare (1), wobei am einen Ende (E1) der Kapillare ein in Form eines hakenartigen Fortsatzes (2) ausgebildetes Mittel zum Rühren und in der Nähe des anderen Endes (E2) ein Balg (3) vorgesehen ist.

2. Vorrichtung nach Anspruch 1, wobei der Balg (3) einen Durchbruch (4) aufweist.

3. Vorrichtung nach einem der vorhergehenden Ansprüche, wobei der hakenartige Fortsatz (2) eine Spitze aufweist.

4. Vorrichtung nach einem der vorhergehenden Ansprüche, wobei der Balg (3) eine ziehharmonikaartige Faltung aufweist.

5. Vorrichtung nach einem der vorhergehenden Ansprüche, wobei die Kapillare (1), der Balg (3) und das Mittel zum Rühren einstückig aus Kunststoff hergestellt sind.

6. Vorrichtung nach einem der Ansprüche 1 bis 4, wobei der Balg (3) an eine rohrartige Aufnahme (5) angeformt ist.

7. Vorrichtung nach Anspruch 6, wobei die rohrartige Aufnahme sich in Richtung einer dem Balg (3) gegenüberliegenden Öffnung (O) verjüngt.

8. Vorrichtung nach einem der Ansprüche 6 oder 7, wobei in die rohrartige Aufnahme (5) im Bereich der Öffnung (O) eine aus Glas hergestellte Kapillare reibschlüssig eingesteckt ist.

## Claims

1. Device for taking up and discharging a given amount of liquid, having a capillary being provided at the one end (El) thereof with a agitating means in the form of a hook-like continuation, and a bellows (3) being provided in the vicinity of the other end (E2).

2. Device according to Claim 1, the bellows (3) having an aperture (4).

3. Device according to one of the preceding claims, the hook-like continuation (2) having a tip.

4. Device according to one of the preceding claims, the bellows (3) having an accordion-like arrangement of folds.

5. Device according to one of the preceding claims, the capillary (1), the bellows (3) and the agitating means being produced in one piece from plastic.

6. Device according to one of Claims 1 to 4, the bellows (3) being formed onto a tubular receptacle (5).

7. Device according to Claim 6, the tubular receptacle tapering in the direction of an opening (O) lying opposite the bellows (3).

8. Device according to one of Claims 6 or 7, a capillary produced from glass being fitted frictionally into the tubular receptacle (5) in the region of the opening (O).

## Revendications

1. Dispositif destiné à recevoir et à délivrer une quantité de liquide prédéfinie, comprenant un tube capillaire (1), sachant qu'à une extrémité (E1) du tube capillaire est prévu un moyen pour remuer réalisé sous la forme d'un prolongement crochu (2) et qu'à proximité de l'autre extrémité (E2) est prévu un soufflet (3).

2. Dispositif selon la revendication 1, sachant que le soufflet (3) comporte une ouverture (4).

3. Dispositif selon l'une des revendications précédentes, sachant que le prolongement crochu (2) présente une pointe.

4. Dispositif selon l'une des revendications précédentes, sachant que le soufflet (3) présente des plis en accordéon.

5. Dispositif selon l'une des revendications précédentes, sachant que le tube capillaire (1), le soufflet (3) et le moyen pour remuer sont d'un seul tenant et sont constitués de matière plastique.

6. Dispositif selon l'une des revendications 1 à 4, sachant que le soufflet (3) est ménagé sur un réceptacle tubulaire (5).

7. Dispositif selon la revendication 6, sachant que le réceptacle tubulaire se rétrécit en direction d'un orifice (O) situé à l'opposé du soufflet (3).

8. Dispositif selon la revendication 6 ou 7, sachant qu'un tube capillaire en verre est enfoncé dans le réceptacle tubulaire (5) au voisinage de l'ouverture (O) et y est immobilisé par frottement.
